# EUROPEAN PATENT APPLICATION

(11) **EP 1 489 862 A1**
(43) Date of publication of application: **22.12.2004**
(21) Application number: 03291520.9
(22) Date of filing: 20.06.2003
(51) Int. Cl.: H04Q 7/32, G06F 17/30

(54) **Database synchronization**

(71) Applicant: Axalto S.A., 92120 Montrouge (FR)
(72) Inventor: Abellan Sevilla, Jorge, Schlumberger Systèmes, 92120 Montrouge (FR); Dubois, Christophe, Schlumberger Systèmes, 92120 Montrouge (FR)

(57) **Abstract**

A method for synchronizing databases (DB1, DB2), a first database (DB1) being stored in a first data processing system (MOB) including a security token (CAR), a second database (DB2) being stored in a second data processing system (MNO), said security token (CAR) being controlled by an operator (OP), characterized in that it comprises the following steps:
d. A loading step in which an application (APP) is loaded into the security token (CAR);
e. An execution step in which the application (APP) executes a command;
f. A requesting step in which said command requests the first data processing system (MOB) to process a synchronization step, said command providing the first data processing system (MOB) with the information about the synchronization parameters to be used for synchronizing the content of the first (DB1) and the second (DB2) database.

## Description

### Field of the Invention

The invention deals with synchronization of databases. Data synchronization is the act of establishing equivalence between two data collections, where each data element in one item maps to a data item in the other, and each item and its respective mapping having a content which is equivalent.

This invention particularly applies to security tokens such as smart card, potentially equipped with a subscription related application provided by a service provider or network operator. This application can be indifferently a SIM (Subscriber Identity Module), a USIM (Universal Subscriber Identity Module), a RUIM (Removable User Identity Module) or any emergent smart card application managed/controlled by an entity such as an operator.

### Prior Art

The existing technology allows Terminal Equipments to exchange and to synchronize data with an external device. The way that a synchronization process is requested depends on the protocol used, which is based on the capabilities of the terminal equipment.

If an operator wants to create their own data synchronization applications (e.g. to provide management procedures linked to synchronization process), some important facts shall be considered:
- The operator does not own the terminal equipment. It is owned by the user.
- Most terminal manufacturers do not provide standardized capabilities to implement customizable applications in their terminals.
- Applications present in the terminals are not controlled by the operator.
- There is a standardized way to update/download applications in the card.

### The Invention

The main objective of the invention is to make easier the control of the synchronization processes of a mobile equipment.

The invention includes the following steps:
a. A loading step in which an application (APP) is loaded into the security token (CAR);
b. An execution step in which the application (APP) executes a command;
c. A requesting step in which said command requests the first data processing system (MOB) to process a synchronization step, said command providing the first data processing system (MOB) with the information about the synchronization parameters to be used for synchronizing the content of the first (DB1) and the second (DB2) database.

In this way, the command will operate as an interface between the application and the synchronization capabilities of the User Equipment.

The card is owned and controlled by the operator. Moreover, the card applications can interact with the terminal, the user, and the network by means of existing "Card Application Toolkit" commands. In this way, according to the invention, the synchronization process is initiated by the card and not the mobile phone. This new command is added within the Card Application Toolkit that can be launched either locally by the user or a special application, or either remotely by the operator via the existing OTA (Over The Air) process. So, The invention can be applied to allow a user or a card application to command the execution of a data synchronization process between a UE (User Equipment) and an external entity. A User Equipment is a device allowing a user access to network services. The User Equipment is at least composed of a terminal equipment (e.g. a mobile equipment) and a smart card.

In our example, this new command will send to the mobile the information needed to perform the synchronization: source device, destination device, used synchronization protocol, used transport layer, type of synchronization and database to synchronize.

It will be easier to understand the invention on reading the description below, given as an example and referring to the attached drawings.

### In the drawings:

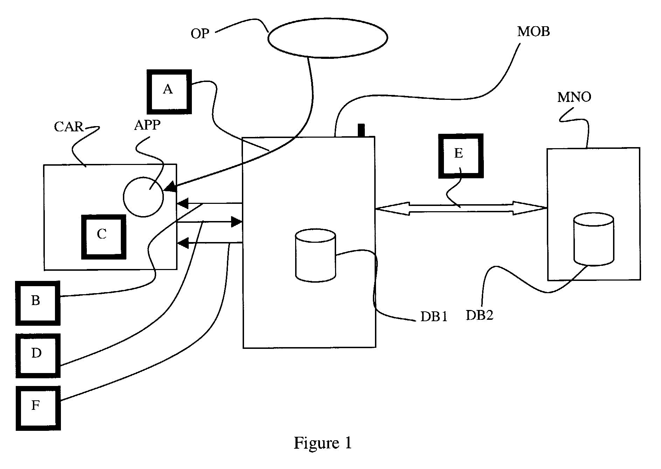

Figure 1 is a block diagram view of the architecture of a computer system on which the solution can be applied. On this figure appears some arrows illustrating different steps of the invention.

### Detailed description of examples illustrating the invention

To simplify the description, the same elements illustrated in the drawings have the same references.

A Mobile Network Operator (MNO) implements a device management system consisting in the following components (see figure 1):
- A database DB1 in the mobile containing a list of basic parameters (i.e. IMEI, used language, sounds, etc...) and a list of applications and games that are installed in the device together with their operating parameters (version, size,...). This database is called Local Device Management Database. In another example, this database should have been stored in the SIM card itself.
- A copy of this database DB2 in a MNO's server. Let us call this database MNO's Device Management Database.
- A device management application in the SIM. This application is controlled and managed by the MNO. The application is in charge of analyzing different parameters (e.g. time that the equipment has been connected) and can dialog with the MNO through a secured channel.

Thanks to the command in the card Application Toolkit, following the MNO's synchronization policy, the SIM application is able to ask the mobile equipment to start a synchronization process of his Local Device Management Database with the MNO's Device Management Database.

This synchronization can be summarized as follows: (see fig.1)
A. The MNO installs a device management application in the subscriber's SIM. The MNO may update this application or modify any parameters used since this is completely controlled by him through a secured communication channel.
B. The card CAR is informed of different events that may occur in the mobile equipment or in the network. The device management application may be informed of these events. This may include data regarding terminal capabilities.
C. Following the MNO's policy contained in the device management application and considering the events and/or messages received, the device management application may conclude that a synchronization of the Mobile Local Database with the MNO's Device Management Database is needed.
D. The device management application uses a new command in the card application toolkit: "Request Synchronization". This command informs the mobile that a new synchronization is requested. In a preferred embodiment, the device management application gives to the mobile synchronization agent the following information:
   - synchronization protocol: Synchronization protocol that should be used. (e.g. SYNCML)
   - session/transport layer: Transport or session layer that should be used (e.g. WSP)
   - type of synchronization:Type of synchronization that should be used (e.g. refresh from the client)
   - Source database: Unique Identifier of the local database in the client. Containing:
      i. device: identifier of the device containing the source database (e.g. IMEI of the mobile equipment )
      ii. database : identifier of the database (e.g. an URL of the Local Device Management Database)
   - Target database: Unique identifier of the database in the server to e synchronized. Containing:
      i. device: identifier of the device containing the target database (e.g. URL of the MNO's server)
      ii. database : identifier of the database (e.g. an URL of the MNO's Device Management Database)
   - Notification: Whether the Application shall be notified of the final result of the synchronization. (e.g. No notification requested)
E. The Mobile equipment receives all the parameters. The mobile is now able to initiate a synchronization process using the information given in the "Request synchronization" command. Synchronization is performed between the Local Device Management Database in the mobile and the MNO's Device Management Database in the MNO's server. Advantageously, a program is able to receive all the parameters and to activate the synchronization process.
F. The card device management application may be informed of the synchronization results if this was requested in the previous "Request synchronization" command.

This controlled synchronization may permit the MNO to offer different services to their subscribers and to perform various management functions. For example, knowing what is the version of an application currently installed in the mobile device, MNO is able to propose an available upgrade.

To be noted that the source database may be any database that can be accessed by the mobile equipment including databases (files, applications,...) of the SIM. This database can be indifferently located in the card CAR or in the mobile equipment MOB.

To be also noticed that the application in the card could use the card application toolkit functionalities to interact with other entities (e.g. the user). In this case, for instance, the user may be prompted before the synchronization command is sent, or it could be informed after the successful synchronization had taken place.

In the claims, said mobile equipment is more generally called first data processing system. In the same way, said server is called second data processing system.

## Claims

1. A method for synchronizing databases (DB1, DB2), a first database (DB1) being stored in a first data processing system (MOB) including a security token (CAR), a second database (DB2) being stored in a second data processing system (MNO), said security token (CAR) being controlled by an operator (OP), **characterized in that** it comprises the following steps:
a. A loading step in which an application (APP) is loaded into the security token (CAR);
b. An execution step in which the application (APP) executes a command;
c. A requesting step in which said command requests the first data processing system (MOB) to process a synchronization step, said command providing the first data processing system (MOB) with the information about the synchronization parameters to be used for synchronizing the content of the first (DB1) and the second (DB2) database.

2. The method according to claim 1, **characterized in that** the information includes the identifier of the database (DB2) to be synchronized.

3. The method according to claim 1, **characterized in that** the information includes the synchronization protocol to be used between the 1^{st} and 2^{nd} data processing systems.

4. The method according to claim 1, **characterized in that** the information includes the identifier of the first database (DB1).

5. The method according to claim 1, **characterized in that** the first data processing system (MOB) is a mobile apparatus coupled to a smart card.

6. The method according to claim 1, **characterized in that** the application is informed of the synchronization result between the 1^{st} and 2^{nd} databases.

7. The method according to claim 1 or 6, **characterized in that** the application is informed of the synchronization result if this was requested in the command.
